# EUROPÄISCHE PATENTSCHRIFT

(11) **EP 2 181 816 B1**
(45) Veröffentlichungstag und Bekanntmachung des Hinweises auf die Patenterteilung: **04.01.2012**
(21) Anmeldenummer: 08168153.8
(22) Anmeldetag: 03.11.2008
(51) Int. Cl.: B27C 5/00, B27D 5/00, B23C 3/12

(54) **Bearbeitungsaggregat**
Processing device
Appareil d'usinage

(43) Veröffentlichungstag der Anmeldung: 05.05.2010
(73) Patentinhaber: Brandt Kantentechnik GmbH, 32657 Lemgo (DE)
(72) Erfinder: Nope, Thomas, 32689 Kalletal (DE)
(74) Vertreter: HOFFMANN EITLE

(56) Entgegenhaltungen:
- EP-A- 1 479 467
- WO-A-2007/051649
- FR-A- 1 099 195

## Beschreibung

### Gebiet der Erfindung

Die Erfindung betrifft ein Bearbeitungsaggregat gemäß dem Oberbegriff des Anspruchs 1.

Ein solches Bearbeitungsaggregat ist aus EP 1 479 467 A1 bekannt.

### Stand der Technik

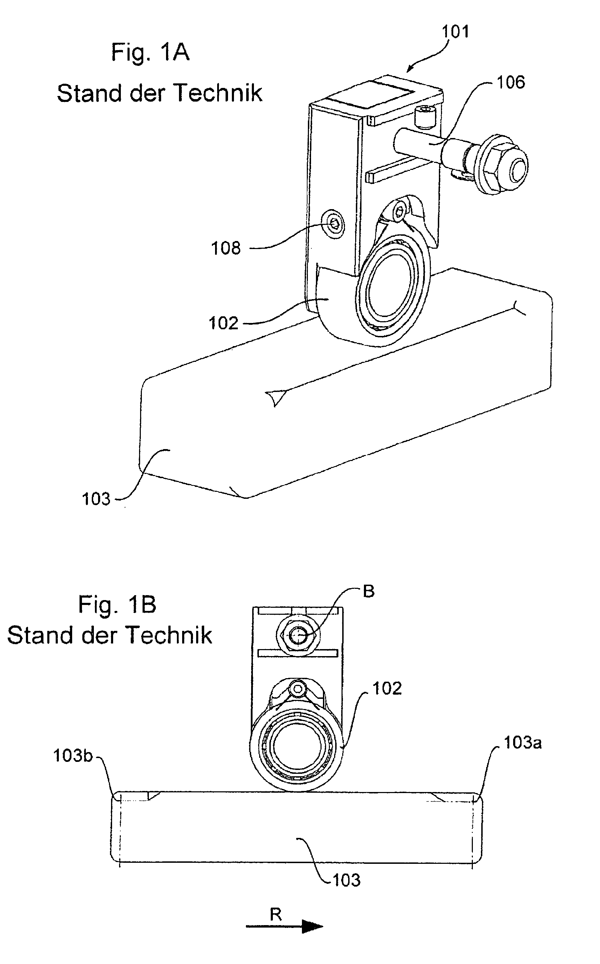

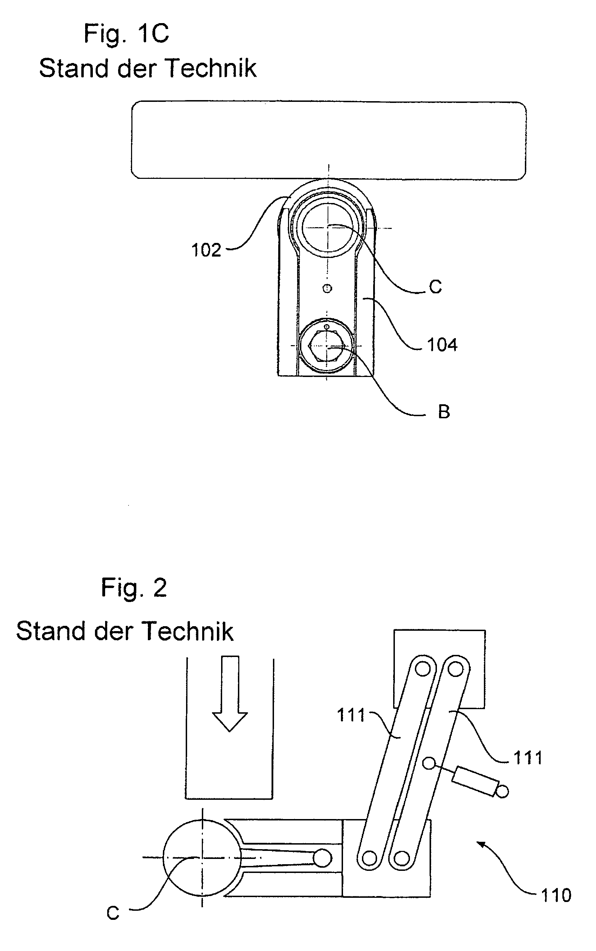

In den Fig. 1A - 1C ist eine Tastrolle gezeigt, die derzeit in einem Bearbeitungsaggregat für die Kanten zwischen den Schmalseiten und insbesondere der Ecken von plattenartigen Werkstücken verwendet wird. Die Tastrolleneinheit 101 umfasst eine Tastrolle 102, die auf dem zu bearbeitenden Werkstück abrollt. Ein Bearbeitungswerkzeug (nicht gezeigt), beispielsweise eine Fräse, ist koaxial (C-Achse) zur Tastrolle 102 angeordnet. Wenn die Tastrolle auf dem Werkstück 103 abrollt, können die Ecken 103a, 103b des Bearbeitungswerkzeugs daher gleichzeitig bearbeitet werden. An der Tastrolleneinheit sind Anschläge 104 angebracht, zu denen sich die Tastrolle 102 relativ bewegen kann.

Die Tastrolle ist um ihre Befestigungsachse B verschwenkbar. Der Verschwenkwinkel kann mit Stellschrauben 108 begrenzt werden, so dass verschiedene maximale Verstellwinkel eingestellt werden können. Die maximalen Verstellwinkel hängen von den Toleranzen ab, die beim Aufkleben der Dekorkante entstehen.

Die Bearbeitung eines Werkstücks wird im Folgenden beschrieben. Die Tastrolleneinheit befindet sich in einer Position, in der die Anschläge 104 auf Höhe der Schmalseite des Werkstücks 103 liegen. Das Werkstück bewegt sich auf die Tastrolle zu (beispielsweise in der Richtung des Pfeils R aus Fig. 1B) und stößt mit der zu bearbeitenden Schmalseite an den Anschlag 104 der Tastrolleneinheit 101 an. Wenn das Werkstück 103 an die Anschläge 104 angeschlagen ist, drückt das sich fortbewegende Werkstück 103 das Bearbeitungsaggregat 101 nach hinten, und das Aggregat bewegt sich mittels einer Aufhängung 110 nach oben (siehe Fig. 2).

Da die Tastrolle und das Bearbeitungswerkzeug koaxial aufgehängt sind, fängt das Bearbeitungswerkzeug an, die Schmalseite des Werkstücks 103 zu bearbeiten, wenn die Tastrolleneinheit 101 soweit nach oben bewegt wurde, dass die Tastrolle die Schmalseite des Werkstücks berührt. Da die Tastrolle in Durchlaufrichtung leicht über die Anschläge hervorsteht und koaxial mit dem Bearbeitungswerkzeug angeordnet ist, bestimmt die Tastrolle den Abstand der Schmalseite des Werkstücks 103 zum Bearbeitungswerkzeug. Die Tastrolle wird dann von dem Werkstück je nach eingestelltem Verschwenkwinkel nach hinten gedrückt und mittels der Aufhängung 110, die bspw. aus parallel aufgehängten Stäben 111 bestehen kann, verschwenkt. Während der weiteren Aufwärtsbewegung der Tastrolle und des Werkzeugs wird dann die Schmalseite und die Kante, insbesondere aber die Ecke des Werkstücks bearbeitet, z.B. mit einer Rundung versehen. Das Bearbeitungsaggregat ist dabei nur für den Kantenbereich der Schmalseiten, bzw. den Eckenbereich vorgesehen und wird nach der Bearbeitung der Ecke vom Werkstück abgehoben. Die gestrichelten Bereiche in Fig. 1B zeigen beispielhaft einen Bearbeitungsbereich des Werkstücks.

Ein Problem bei dieser Tastrolleneinheit besteht darin, dass die Einstellung des Verschwenkspiels der Tastrolle 102 um die Achse B aufwendig ist und nicht während des Durchlaufens ausgeführt werden kann. Da durch das Aufleimen verschiedener Dekorkanten aber unterschiedliche Toleranzen entstehen, müssen die Verschwenkwinkel häufig umgestellt werden. Ein weiterer Nachteil ergibt sich daraus, dass durch das Verschwenken um die Achse B die Rolle sich nicht nur in einer Richtung des Pfeils R bewegt, sondern ebenfalls in einer Richtung senkrecht zum Pfeil R (in Fig. 1B nach oben). Dies liegt daran, dass die Verschwenkbewegung auf einem Kreis um die Achse B liegt. Da die Kanten zwischen Breit- und Schmalseite in einem anderen Arbeitsgang bearbeitet werden, kann diese zur Bewegungsrichtung R senkrechte Bewegung auf der Oberfläche des Werkstücks 103 an den Ecken entweder durch die geringe Änderung in der Bearbeitungstiefe zu ungewollten Marken im bearbeiteten Werkstück führen, was das äußere Erscheinungsbild des Werkstücks nachteilig beeinflusst, oder man muss die Bearbeitung der Kanten zwischen Breit- und Schmalseite auf diese geringe Tiefenunterschiede abstimmen, was wiederum mehr Arbeitsaufwand und Komplexität verursacht.

Die EP 1 479 467 A1 offenbart eine Bearbeitungsvorrichtung zur Bearbeitung von Kanten an Stirnseiten von plattenförmigen Werkstücken, die ein Bearbeitungsaggregat umfasst, das aus einem Bearbeitungswerkzeug und einer Tastrolle besteht, die miteinander bewegungsfest verbunden sind. Die Bearbeitungseinheit der genannten Bearbeitungsvorrichtung kann translatorisch quer zur Durchlaufrichtung bewegt und über einen sich verjüngenden Schieber auch in Durchlaufrichtung verschoben werden.

### Darstellung der Erfindung

Eine Aufgabe der Erfindung besteht darin, eine einfache und schnelle Verstellmöglichkeit der Feinjustierung einer Tastrolle bereit zu stellen, die eine optimale Verwendung einer Durchlaufmaschine ermöglicht, indem sie geringe Umrüstzeiten aufweist.

Diese und weitere Aufgaben werden durch ein Bearbeitungsaggregat mit den Merkmalen gemäß Anspruch 1 gelöst.

Andere erfindungsgemäße Bearbeitungsaggregate, die die oben gestellte Aufgabe lösen, umfassen ein Bearbeitungsaggregat insbesondere für die Bearbeitung der Kanten und Ecken von bevorzugt plattenartigen Werkstücken, die bevorzugt zumindest teilweise aus Holz, Holzwerkstoffen, Kunststoffen oder dergleichen bestehen, und das bevorzugt in einer Durchlaufmaschine eingesetzt wird, wobei das Bearbeitungsaggregat eine Werkzeugeinheit mit einem Bearbeitungswerkzeug, mit dem Seiten und deren Kanten- und/oder Eckenbereiche bearbeiten werden und eine Tastrolle aufweist, die den Abstand des Bearbeitungswerkzeugs zu dem Werkstück bestimmt und an dem Werkstück abrollt und die relativ zu dem Bearbeitungswerkzeug bewegbar befestigt ist, sowie eine Befestigungseinheit, die bevorzugt an dem Aggregat angebracht ist und die die Tastrolle relativ zu dem Bearbeitungswerkzeug translatorisch, bevorzugt ausschließlich parallel zur Ebene der Werkstückauflage und weiter bevorzugt ausschließlich parallel zur Durchlaufrichtung und/oder im Wesentlichen senkrecht zur Durchlaufrichtung bewegbar lagert, und insbesondere noch eine Antriebseinheit, welche eingerichtet ist, die Bewegung der Befestigungseinheit zu veranlassen.

Ein erfindungsgemäßes Bearbeitungsaggregat weist ein Bearbeitungswerkzeug auf, das an einer Werkzeugeinheit angebracht ist und mit dem bevorzugt die im Durchlauf vorlaufende und/oder nachlaufende Seite und deren Kanten- und/oder Eckenbereich bearbeitet wird. Ferner umfasst das Bearbeitungsaggregat eine Tastrolle, die den Abstand des Bearbeitungswerkzeugs zu dem Werkstück bestimmt, die an dem Werkstück abrollt und die eine Relativbewegung zu dem Bearbeitungswerkzeug durchführen kann. Eine Antriebsvorrichtung, die das Bearbeitungswerkzeug antreibt, eine Befestigungseinheit, die bevorzugt an dem Aggregat angebracht ist und die die Tastrolle relativ zu dem Bearbeitungswerkzeug translatorisch bewegen kann, sowie eine Antriebseinheit, die die Bewegung der Befestigungseinheit veranlasst, sind ebenfalls vorgesehen. Durch die translatorische Verschiebungsmöglichkeit der Tastrolle in Bezug auf das Bearbeitungswerkzeug wird es ermöglicht, ohne auch nur geringste Höhenverstellungen die Relativpositionen der Tastrolle und des Bearbeitungswerkzeugs schon während des Durchlaufs zu verändern. Dies gilt insbesondere dann, wenn ausschließlich eine translatorische Verschiebung vorgesehen ist, da die Steifigkeit in beispielsweise einer rotatorischen Bewegungsrichtung dann deutlich besser ist. Dadurch wird eine sehr genaue Verstellung der Tastrolle möglich und aufgrund der flexiblen Umstellung während des Durchlaufs die Umrüstzeit optimiert.

Die Relativbewegung ist bevorzugt parallel zur Ebene der Werkstückauflage und weiter bevorzugt parallel zur Durchlaufrichtung.

Die Befestigungseinheit weist vorzugweise eine Schwalbenschwanzverbindung auf, um die Tastrolle zu bewegen. Eine Schwalbenschwanzverbindung ist konstruktiv eine einfache Möglichkeit für eine translatorische Bewegung, gleichzeitig garantiert ihr Formschluss bei einer Verschiebung der Tastrolle, dass eine seitliche Abweichung in der Regel nicht vorhanden ist. Ferner weist die Befestigungseinheit eine Exzenterscheibe auf, die von der Antriebseinheit angetrieben wird, und die mit einem Teil der Befestigungseinheit, bevorzugt einem Teil der Schwalbenschwanzverbindung, so zusammen wirkt, dass die Relativbewegung der Tastrolle ermöglicht wird. Weiter vorzugweise weist die Exzenterscheibe einen Stift auf, der mit einer Nut zusammen wirkt, die in dem mit der Exzenterscheibe zusammenwirkenden Teil der Befestigungseinheit eingebracht ist. Diese Konstruktion ermöglicht ein sehr genaues Verstellen der Tastrolle und begünstigt eine rechtwinklige Anordnung zwischen der Verschiebungsmöglichkeit und der Antriebseinheit für die Relativbewegung der Befestigungseinheit.

An der Tastrolle kann ein Anschlag vorgesehen, an dem sich das Werkstück ausrichten kann. Vorzugsweise wird die Tastrolle selbst als Anschlag verwendet. Ein Anschlag dient als Referenzpunkt, um einen Bezug zwischen Werkstück und Werkzeug herzustellen, wobei durch die Verwendung der Tastrolle als Anschlag die Durchlaufzeit verbessert werden kann, da unmittelbar beim Anschlagen des Werkstücks die Bearbeitung beginnen kann und das Werkzeug nicht erst noch ein Stück nach oben bewegt werden muss.

Vorzugweise ist die Befestigungseinheit an der Werkzeugeinheit gelagert, so dass das Bearbeitungsaggregat kompakt ausgestaltet wird. Eine kompakte Bauweise benötigt weniger Raum und kann somit flexibler eingesetzt werden.

Bevorzugt ist die Tastrolle nach ihrer Relativbewegung in Bezug auf das Werkzeug spielfrei festgesetzt, wodurch die Genauigkeit der Bearbeitung erhöht wird und die Tastrolle somit auch besser als Anschlag verwendet werden kann.

### Kurze Beschreibung der Figuren

- Fig. 1A, 1B und 1C: zeigen eine Tastrolle gemäß dem Stand der Technik, wobei die Fig. 1A eine perspektivische Sicht auf die Tastrolle an einem zu bearbeitenden Werkstück ist, die Fig. 1B eine Rückansicht ist und die Fig. 1C eine Vorderansicht ist.
- Fig. 2: zeigt ein Hebelsystem, das als Aufhängung für das Bearbeitungsaggregat dient und das auch mit der vorliegenden Erfindung verwendet werden kann.
- Fig. 3A, 3B und 3C: zeigen ein erfindungsgemäßes Bearbeitungsaggregat, wobei die Fig. 3A eine perspektivische Sicht von vorne auf ein erfindungsgemäßes Bearbeitungsaggregat an einem Werkstück ist, Fig. 3B eine perspektivische Sicht von hinten auf ein erfindungsgemäßes Bearbeitungsaggregat an einem Werkstück ist und Fig. 3C eine Frontsicht auf ein erfindungsgemäßes Bearbeitungsaggregat an einem Werkstück ist.

### Ausführliche Beschreibung bevorzugter Ausführungsformen

Bevorzugte Ausführungsformen der vorliegenden Erfindung werden nachfolgend ausführlich unter Bezugnahme auf die Figuren beschrieben.

Bei der Entwicklung des erfindungsgemäßen Bearbeitungsaggregats besteht eine erste Überlegung darin, die Verstellschrauben 108 aus dem Stand der Technik automatisiert zu verstellen, so dass der mögliche Verstellwinkel der Tastrolle 102 auch während der Bearbeitung automatisch verstellt werden könnte. Da jedoch die Verstellschrauben 108 auf beiden Seiten der Tastrolle nicht so leicht zu erreichen sind und eine Begrenzungskonstruktion für den Verschwenkwinkel der Tastrolle 102 relativ kompliziert zu bewerkstelligen ist, gibt es noch bessere Lösungen, um die erfindungsgemäße Aufgabe zu lösen. Da bei einer Lösung mit einer motorisierten Verstellung der Stellschrauben das Bearbeitungsaggregat wahrscheinlich größer ausgestaltet werden müsste, ist ein weiterer Vorteil der nachfolgend erläuterten Ausführungsform eine erhöhte Flexibilität des Aggregats durch eine kompakte Bauweise.

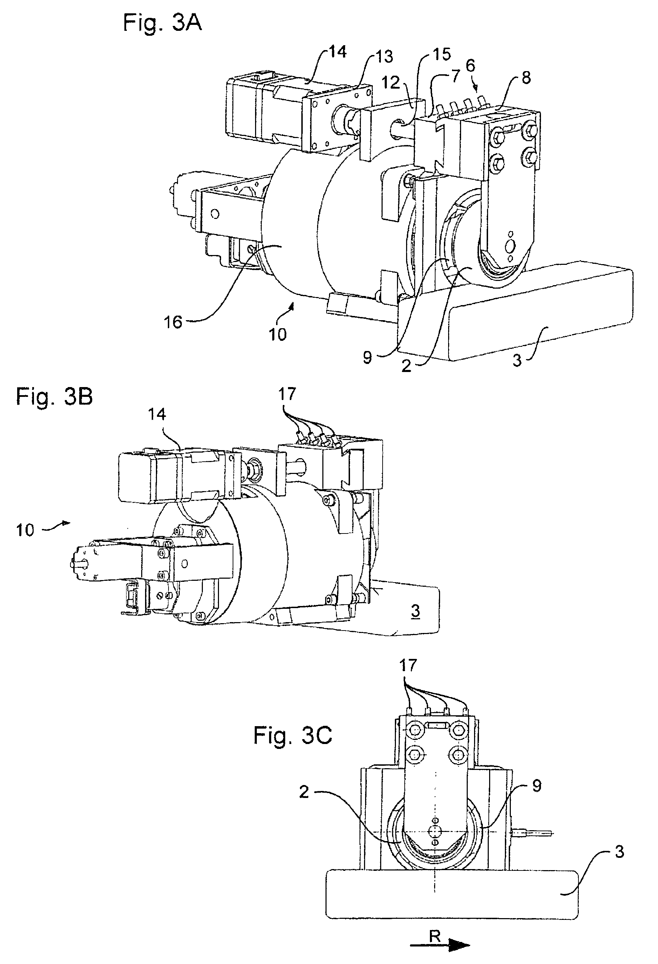

Die vorliegende Erfindung weist ein Aggregat 10 auf, das eine Tastrolle und eine Werkzeugeinheit 16 umfasst, die ein Werkzeug 9 aufweist, beispielsweise eine Fräse, wie in den Fig. 3a-3c gezeigt. Das Werkzeug ist in einer Grundausrichtung, bevorzugt koaxial mit der Tastrolle 2 angeordnet. Die Werkzeugeinheit 16 kann ferner auch die Antriebseinheit, wie beispielsweise einen Motor für das Werkzeug umfassen. Der Motor kann aber auch abseits der Werkzeugeinheit 16 und sogar vom Aggregat getrennt vorgesehen sein und ein Werkzeug beispielsweise über einen Riemen antreiben.

Eine Tastrolle 2 ist an einer Befestigungseinheit 6 angebracht und vorzugsweise mittels dieser an dem Aggregat 10 befestigt. In der vorliegenden Ausführungsform besteht die Befestigungseinheit 6 aus einer Linearführung, die ein Schwalbenschwanzprofil hat und die an der Werkzeugeinheit 16 mittels Stützen 12 gelagert ist. Eine Stütze 12 ist gleichzeitig ein Teil des Schwalbenschwanzes, wodurch dieser Teil relativ zur Werkzeugeinheit 16 unbeweglich ist. Ferner ist eine Antriebseinheit vorgesehen, die die Bewegung der Tastrolle 2 relativ zum Werkzeug ermöglicht. Die Antriebseinheit 14 ist in der vorliegenden Ausführungsform ein Elektromotor, vorzugweise ein Schrittmotor, und über eine Lagerung 13 mit der Werkzeugeinheit 16 verbunden. Der Motor kann fest mit dem Aggregat oder der Werkzeugeinheit 16 verbunden sein, jedoch muss seine Antriebswelle 15 in Bezug auf das Aggregat drehbar bleiben. Die Antriebseinheit ist über eine Welle 15 mit der Befestigungseinheit gekoppelt, wobei die Welle bevorzugt in den Lagereinheiten 12 gelagert ist. Die Welle selbst kann eine gerade Welle sein, kann aber auch ein Gelenk umfassen, beispielsweise eine Kardanwelle oder eine andere Gelenkwelle. Das erhöht die Flexibilität für die Anordnung der Antriebseinheit 14.

Die Antriebswelle 15 muss nicht zwangsweise an dem Bearbeitungsaggregat gelagert sein, jedoch bevorzugt so, dass ihre Eigenrotation die einzige Relativbewegung ist, die zwischen ihr und der Befestigungseinheit bzw. der Werkzeugeinheit 16 stattfindet.

Für Werkzeuge, die keinen Motor verwenden, muss dieser natürlich nicht vorgesehen sein. Solche Werkzeuge sind beispielsweise Profilziehklingen zum Bearbeiten und Profilieren der Kanten eines Werkstücks, oder auch einfache Leimabziehklingen, mit denen überschüssiges Haftmittel zwischen aufgeklebter Dekorkante und Werkstückplatte entfernt werden.

Die Befestigungseinheit 6 weist, wie oben beschrieben, bevorzugt eine Schwalbenschwanzkonstruktion auf, wobei auf einer Seite des Schwalbenschwanzes eine Platte bevorzugt eine Bronzeplatte, eingelegt wird, die durch Stellschrauben 17 einen Seitendruck auf den Schwalbenschwanz ausübt. Die Platte ist eingefettet und ermöglicht dem Schwalbenschwanz eine gleitende Relativbewegung, wobei durch einen geeigneten Druck der Schrauben 17 die Seitenführung immer gewährleistet ist. Wie in Fig. 3B zu sehen ist, ist der Schwalbenschwanz selbst an der Werkzeugeinheit 16 befestigt und die Antriebswelle ist in dem Schwalbenschwanz gelagert. Die Schwalbenschwanzform ist nur eine bevorzugte Ausführungsform einer solchen Linearführung und es kann jede beliebige Geometrie verwendet werden, die eine Linearbewegung ermöglicht und gleichzeitig eine Bewegung in anderen Bewegungsrichtungen verhindert. Wichtig ist nur eine zumindest in Teilbereichen oder auch eine komplette komplementäre Ausgestaltung der beiden Teile. Der Schwalbenschwanz ist jedoch eine bevorzugte Ausführungsform, da die Fertigungstoleranzen einfacher ausgeglichen werden können.

Um die Linearbewegung zu erreichen, ist in einer bevorzugten Ausführungsform am Ende der Antriebswelle 15 eine Exzenterscheibe anbeordnet, die weiter bevorzugt mit einem Stift ausgestattet ist. Der Stift wirkt mit einer Nut zusammen, die in dem einen Teil der Befestigungseinheit 6 eingelassen ist. Das heißt, wenn die Exzenterscheibe gedreht wird, schiebt sie über die Nut den einen Teil 8 der Linearführung in Abhängigkeit des Drehwinkels und der Drehrichtung um eine gewisse Länge nach rechts oder nach links. Eine andere Möglichkeit wäre auf der Antriebswelle Nocken anzubringen und in dem zweiten Teil 8 der Befestigungseinheit 6 entsprechende Aussparungen, wobei vorzugsweise zumindest zwei Nocken verwendet werden, die hintereinander angeordnet sind, und die jeweils für eine Bewegungsrichtung verantwortlich sind. Wieder eine andere Möglichkeit könnte sein, in einen Teil der Befestigungseinheit, beispielsweise in einen Teil des Schwalbenschwanzes, ein Gewinde einzubringen und die Linearbewegung durch eine Schraube zu erzeugen, die mit dem Gewinde zusammenwirkt. Man könnte beispielsweise am Ende einer Kardanwelle ein solches Schraubengewinde einbringen und den Schwalbenschwanz linear bewegen. Das Gewindeloch und das Schraubengewinde können dann auch gleichzeitig als Führung dienen, die eine komplementäre Form aufweisen. Da eine solche Lösung es erforderlich machen würde, dass die Schraubenstange parallel zu der Linearführung ist, müsste der Motor mit Antriebswelle ebenfalls parallel ausgerichtet sein. Eine Umlenkung über eine Kardanwelle oder eine andere Gelenkwelle würde es jedoch ermöglichen, den Motor im Wesentlichen so dicht beieinander anzubringen, wie es in Fig. 3 dargestellt ist (also beispielsweise im Wesentlichen senkrecht oder winkelig zur Linearbewegung der Tastrolle), was wiederum die Kompaktheit des Aggregats garantieren würde. Eine Umlenkung über ein einfaches Getriebe (Zahnrad/Ritzel) würde diese Vorteile ebenfalls bereitstellen.

Wenn nun die Tastrolle parallel zur Richtung R (siehe Fig. 3C) verschoben wird, wird die Höhenlage der Tastrolle nicht verändert. Ferner ist nach der Bewegung die Tastrolle auch nicht mehr durch äußere Einflüsse zu bewegen, so dass sie spielfrei an der Werkzeugeinheit 16 über die Befestigungseinheit 6 aufgehängt ist, was die Eignung als Anschlag stark verbessert. Jedoch ist es auch hier möglich, separate Anschläge vorzusehen, da diese eine ebenere und damit geeigneter erscheinende Anschlagfläche aufweisen können, als die Tastrolle. Die Anschläge können sowohl an der Werkzeugeinheit 16, also relativ zur Tastrolle bewegbar als auch an der Tastrolle befestigt sein, d.h. mit dieser bewegbar, da die Tastrolle nach ihrer Bewegung spielfrei festgesetzt ist.

Der Ablauf ist dann im Wesentlichen der gleiche wie der im Stand der Technik beschriebene, bis auf die Tatsache, dass die Tastrolle bevorzugt ausschließlich linear zur Werkzeugeinheit 16 bewegt wird. Ferner kann nun die Einstellung der Tastrolle 2 während der Bewegung eines Aggregats erfolgen und die Tastrolle 2 wird von dem anschlagenden Werkstück nicht mehr bewegt. Die Aufhängung 110, wie sie in Figur 2 gezeigt ist, wird bevorzugt auch mit dem erfindungsgemäßen Aggregat 10 verwendet. Die Aufwärtsbewegung der Tastrolle 2 und des Werkzeugs 9 geschehen dann analog zum Stand der Technik.

Die Erfindung kann nicht nur auf ein Kanten- bzw. Eckenbearbeitungsaggregat angewendet werden, sondern auf verschiedenste Bearbeitungsaggregate. Darunter fallen beispielsweise mit Motoren ausgerüstete Sägeaggregate, Fräsaggregate Zum Kappen von Kantenmaterial oder zum Bearbeiten einer Kante (z.B. Fräsen von Radien und/oder Fasen) oder auch motorlose Klingenvorrichtungen zum Abziehen von Kanten. Dazu kann auch die Tastrolle 2 eine andere Ausrichtung einnehmen. Das heißt, dass sie beispielsweise bei einer Abzieheinrichtung die Rolle nicht oben auf dem Werkstück abrollen muss, sondern auch auf der Schmalseite des Werkstücks abrollen kann, je nachdem welcher Abstand (senkrecht oder horizontal zur Schmalseite) eingestellt werden muss. Ferner kann die Rolle auch zusammen mit dem Bearbeitungsaggregat quer zur Durchlaufrichtung bewegt werden. Dies könnte z.B. bei einem Aggregat der Fall sein, dass die in Durchlaufrichtung vorlaufende und/oder nachlaufende Schmalseite oder deren Kante bearbeitet.

Jede der vorgenannten Aggregate kann eine erfindungsgemäße Befestigungseinheit 6 zwischen Tastrolle 2 und Bearbeitungswerkzeug aufweisen, so dass die Tastrolle 2 in Bezug auf im Betrieb entstehende Toleranzen problemlos nachgestellt werden kann.

## Patentansprüche

1. Bearbeitungsaggregat (10) für die Bearbeitung insbesondere der Kanten und Ecken von Werkstücken (3) in einer Durchlaufmaschine, wobei das Bearbeitungsaggregat (10) aufweist:
eine Werkzeugeinheit (16) mit einem Bearbeitungswerkzeug;
eine Tastrolle (2), die den Abstand des Bearbeitungswerkzeugs zu dem Werkstück bestimmt und an dem Werkstück abzolten kann und die relativ zu dem Bearbeitungswerkzeug bewegbar befestigt ist;
eine Antriebsvorrichtung, die das Bearbeitungswerkzeug antreibt;
**gekennzeichnet durch**
eine Befestigungseinheit (6), welche die Tastrolle (2) relativ zu dem Bearbeitungswerkzeug translatorisch lagert, und
eine Antriebseinheit (14), geeignet für die Bewegung der Befestigungseinheit (6).

2. Bearbeitungsaggregat nach Anspruch 1, bei dem die Befestigungseinheit (6) eine Schwalbenschwanzverbindung aufweist, welche die Relativbewegung der Tastrolle (2) ermöglicht.

3. Bearbeitungsaggregat nach Anspruch 1 oder 2, bei dem die Antriebseinheit für die Befestigungseinheit (6) eine Exzenterscheibe aufweist, die mit dem einem Teil der Befestigungseinheit (6) zusammenwirkt und so die Relativbewegung der Tastrolle (2) ermöglicht.

4. Bearbeitungsaggregat nach Anspruch 3, bei dem die Exzenterscheibe einen Stift aufweist und in dem mit der Exzenterscheibe zusammenwirkenden Teil der Befestigungseinheit (6) eine Nut ausgebildet ist, wobei der Stift mit der Nut so zusammenwirkt, dass eine Relativbewegung ermöglicht wird.

5. Bearbeitungsaggregat nach einem der vorhergehenden Ansprüche, bei der an der Tastrolle (2) ein Anschlag vorgesehen ist oder die Tastrolle (2) selbst als Anschlag verwendet werden kann.

6. Bearbeitungsaggregat nach einem der vorhergehenden Ansprüche, bei dem die Befestigungseinheit (6) an der Werkzeugeinheit gelagert ist.

7. Bearbeitungsaggregat nach einem der vorhergehenden Ansprüche, bei dem die Tastrolle (2) nach der Bewegung spielfrei festgesetzt ist.

8. Bearbeitungsaggregat nach einem der vorhergehenden Ansprüche, bei dem das Bearbeitungswerkzeug die im Durchlauf vorlaufende und/oder nachlaufende Seite und deren Kanten- und/oder Eckenbereich bearbeitet.

9. Bearbeitungsaggregat nach einem der vorhergehenden Ansprüche, bei dem die Befestigungseinheit (6) die Tastrolle (2) ausschließlich parallel zur Ebene der Werkstückauflage lagert.

10. Bearbeitungsaggregat nach Anspruch 9, bei dem die Befestigungseinheit (6) die Tastrolle (2) ausschließlich parallel zur Durchlaufrichtung oder im Wesentlichen senkrecht zur Durchlaufrichtung bewegbar lagert.

## Claims

1. Machining unit (10) for machining in particular the edges and corners of workpieces (3) in a continuous machine, wherein the machining unit (10) has:
a tool unit (16) having a machining tool;
a sensing roller (2) which determines the distance of the machining tool from the workpiece and may roll on the workpiece and which is attached to be movable relative to the machining tool;
a drive device which drives the machining tool;
**characterised by**
an attachment unit (6) which supports the sensing roller (2) relative to the machining tool in translational manner, and
a drive unit (14) suitable for movement of the attachment unit (6).

2. Machining unit according to claim 1, in which the attachment unit (6) has a dovetail joint which facilitates the relative movement of the sensing roller (2).

3. Machining unit according to claim 1 or 2, in which the drive unit for the attachment unit (6) has an eccentric disc which cooperates with the one part of the attachment unit (6) and thus facilitates the relative movement of the sensing roller (2).

4. Machining unit according to claim 3, in which the eccentric disc has a pin and a groove is formed in the part of the attachment unit (6) cooperating with the eccentric disc, wherein the pin cooperates with the groove so that a relative movement is facilitated.

5. Machining unit according to one of the preceding claims, in which a stop is provided on the sensing roller (2) or the sensing roller (2) itself may be used as a stop.

6. Machining unit according to one of the preceding claims, in which the attachment unit (6) is mounted on the tool unit.

7. Machining unit according to one of the preceding claims, in which the sensing roller (2) is fixed without clearance after the movement.

8. Machining unit according to one of the preceding claims, in which the machining tool processes the, during passage, advancing and/or trailing side and the edge region and/or corner region thereof.

9. Machining unit according to one of the preceding claims, in which the attachment unit (6) supports the sensing roller (2) exclusively parallel to the plane of the workpiece support.

10. Machining unit according to claim 9, in which the attachment unit (6) supports the sensing roller (2) to be movable exclusively parallel to the passage direction or essentially vertically to the passage direction.

## Revendications

1. Appareil d'usinage (10), pour l'usinage en particulier des arêtes et angles de pièces d'oeuvre (3) dans une machine à passage, l'appareil d'usinage (10) présentant :
une unité d'outil (16) avec un outil d'usinage ;
un galet palpeur (2), déterminant la distance d'espacement de l'outil d'usinage par rapport à la pièce d'oeuvre et pouvant rouler sur la pièce d'oeuvre et fixé, de manière déplaçable, par rapport à l'outil d'usinage ;
un dispositif d'entraînement, entraînant l'outil d'usinage ;
**caractérisé par**
une unité de fixation (6), servant au montage déplaçable en translation du galet palpeur (2) par rapport à l'outil d'usinage, et
une unité d'entraînement (14), convenant pour produire le déplacement de l'unité de fixation (6).

2. Appareil d'usinage selon la revendication 1, dans lequel l'unité de fixation (6) présente une liaison à queue d'aronde, permettant le déplacement relatif du galet palpeur (2).

3. Appareil d'usinage selon la revendication 1 ou 2, dans lequel l'unité d'entraînement pour l'unité de fixation (6) présente un disque excentrique, coopérant avec une partie de l'unité de fixation (6) et permettant ainsi le déplacement relatif du galet palpeur (2).

4. Appareil d'usinage selon la revendication 3, dans lequel le disque excentrique présente une tige et, dans la partie, coopérant avec le disque excentrique, de l'unité de fixation (6) est réalisée une rainure, la tige coopérant avec la rainure de manière à permettre un déplacement relatif.

5. Appareil d'usinage selon l'une des revendications précédentes, dans lequel une butée est prévue sur le galet palpeur (2), ou le galet palpeur (2) lui-même peut être utilisé comme butée.

6. Appareil d'usinage selon l'une des revendications précédentes, dans lequel l'unité de fixation (6) est montée en palier sur l'unité d'outil.

7. Appareil d'usinage selon l'une des revendications précédentes, dans lequel le galet palpeur (2) est fixé sans jeu, une fois le déplacement effectué.

8. Appareil d'usinage selon l'une des revendications précédentes, dans lequel l'outil d'usinage usine la face se présentant à l'avant lors du passage et/ou se présentant à l'arrière lors du passage et sa zone d'arête et/ou d'angle.

9. Appareil d'usinage selon l'une des revendications précédentes, dans lequel l'unité de fixation (6) sert au montage du galet palpeur (2), exclusivement parallèlement au plan du reposoir à pièce d'oeuvre.

10. Appareil d'usinage selon la revendication 9, dans lequel l'unité de fixation (6) sert au montage déplaçable du galet palpeur (2), exclusivement parallèlement à la direction de passage ou sensiblement perpendiculairement à la direction de passage.
